# EUROPEAN PATENT APPLICATION

(11) **EP 4 704 066 A1**
(43) Date of publication of application: **04.03.2026**
(21) Application number: 24196650.6
(22) Date of filing: 27.08.2024
(51) Int. Cl.: G09B 7/00, G09B 11/10, G09B 19/00

(54) **A METHOD FOR PROVIDING A TRAINING SIMULATION FOR A PERSON BY AN ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Johnson, Rebecca, 81739 München (DE)
(74) Representative: Siemens Patent Attorneys

(57) **Abstract**

The invention relates to a method for providing a training simulation (22) for a person (20) by an electronic computing device (10), comprising the steps of selecting a task (36) to be solved by the person (20) out of a plurality of stored tasks (36) by the electronic computing device (10); providing an input platform (32) for capturing at least one question (38) from the person (20) for solving the task (36) by the electronic computing device (10); receiving the question (38) inputted by the person (20) by the electronic computing device (10); analyzing the received question (38) if the question (38) is an open question (38) by the electronic computing device (10); and if the received question (38) is an open question (38), generating a hint for the person (20) to solve the task (36) by the electronic computing device (10). Furthermore, the present invention relates to a computer program product, a computer-readable storage medium, as well as to an electronic computing device (10).

## Description

The present invention relates to a method for providing a training simulation for a person by an electronic computing device according to the pending claim 1. Furthermore, the present invention relates to a corresponding computer program product, a corresponding computer-readable storage medium, as well as to a corresponding electronic computing device.

Soft skills, also known as interpersonal or social skills, are personal qualities, behaviors and abilities that a person needs to effectively communicate, collaborate, and build relationships with others. Unlike hard skills, such as technical or job specific skills, soft skills are not easily defined or measured, but are equally important for professional and personal success. Training programs for soft skills can help improve communication skills, teamwork, leadership abilities, conflict resolution skills, creativity, time management, empathy, and more. Such training can be offered in form of workshops, seminars, coaching, online courses, or personal development.

During a soft skill training program, various methods are used, such as role plays, group discussions, case studies, feedback sessions, and reflection exercises. These methods enable participants to practice and improve their skills in realistic situations and receive immediate feedback from trainers and other participants.

Soft skills trainings can be offered for individuals, teams, or organizations. For businesses, targeted soft skills trainings can help increase productivity, motivation, and job satisfaction, reduce conflicts, and foster a positive work culture.

It is important to note that soft skills cannot be acquired in a single training session, but rather are a continuous learning process that is fostered through experience, feedback, and reflection. A good soft skill training program should therefore be tailored to individual needs and goals of participants and have sustainable impact.

There are several computer programs and online platforms known that can help individuals develop and improve their soft skills. These programs often use interactive elements, such as simulations, quizzes and games to engage users and provide a hand-on learning experience.

In particular, training material for soft skill trainings is of limited availability. The skill of active listening is useful in daily negotiation and conversion, for example, in sales, service and management but involves self-control and restraint.

Therefore, there is a need in the art to provide a soft skill training program in order to train in a frequent manner for developing the soft skills.

Therefore, it is an object of the present invention to provide a method, a corresponding computer program product, a corresponding computer-readable storage medium, as well as a corresponding electronic computing device, by which developing soft skills of a person is improved.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for providing a training simulation for a person by an electronic computing device. A task to be solved by the person out of a plurality of stored tasks is selected by the electronic computing device. An input platform for capturing at least one question from the person for solving the task is provided by the electronic computing device. The question inputted by the person is received by the electronic computing device. The question is analyzed, if the question is an open question by the electronic computing device. If the received question is an open question, generating a hint for the person to solve the task by the electronic computing device is provided.

Therefore, the person can be trained for asking open questions instead of closed questions. Asking open questions is a powerful tool for developing soft skills of a person, as the open questions require active listening, empathy and effective communication. An open question is a type of question that cannot be answered with a simple yes or no response but rather requires the respondent to provide more detailed information or insights.

Using open questions in conversations can help build rapport and trust with others, as it shows that the person is interested in their thoughts, feelings, and experiences. Open questions can also encourage active listening, as they require the listener to fully engage with the speaker and pay attention to what they are saying. This can lead to a deeper understanding of the speaker's perspective, which is an important soft skill for building positive relationships and effective communication. In addition to building rapport and trust, open questions can also help develop other soft skills such as problem-solving, creativity, and adaptability. By encouraging detailed responses, open questions can help uncover new information or perspectives that may not have been considered before. This can lead to innovative solutions or approaches to challenges, which is an important soft skill for success in today's rapidly changing world.

Using open questions also requires flexibility and adaptability, as the response may take the conversation in a different direction than anticipated. Being able to adjust and respond appropriately to unexpected answers is an important soft skill for effective communication and relationship building.

Overall, using open questions can help develop a range of soft skills that are essential for success in both personal and professional settings. By encouraging active listening, empathy, problem-solving, creativity, and adaptability, open questions can help individuals build positive relationships, communicate effectively, and succeed in their goals.

Therefore, the method is provided, that only, if the electronic computing device has analyzed the question as an open question, a hint for solving the task is provided. For example, otherwise, if a closed question is asked, no hint for solving the task is provided.

The electronic computing device therefore may comprise at least one input device, for example, a keyboard or a mouse for inputting the questions. Another possibility is a microphone for inputting the question into the input platform.

Furthermore, the electronic computing device may comprise a display device for displaying the questions as well as for displaying the answer of the electronic computing device with the hint for solving the problem. Alternatively, or additionally, the answer with the hint for solving the task can be outputted auditory.

Therefore, depending on the input of the person, the electronic computing device is configured for generating an output. If the question is an open question, a hint for solving the task is provided. Otherwise, if the question is a closed question, no hint for solving the task is provided.

Therefore, the electronic computing device provides a so-called serious game. A serious game is a type of game designed with a specific purpose beyond just entertainment. While traditional games are primarily created for enjoyment and recreation, serious games aim to educate, train, or achieve other specific goals related to education, business, health, or social impact. Serious games can take many forms, including video games, board games, card games, and role-playing simulations. They often incorporate elements of storytelling, problem-solving, and interaction to engage players and help them learn new skills or knowledge. Serious games are used in a variety of settings, such as schools, businesses, healthcare facilities, and government agencies, to achieve goals such as: Educating students on complex subjects; Training employees on job-related skills; Simulating real-world scenarios for emergency response training; Helping patients recover from illness or injury; Raising awareness of social issues. Serious games are becoming increasingly popular as a way to make learning and training more engaging, interactive, and effective. By combining the power of play with specific goals and objectives, serious games can help individuals and organizations achieve their goals in new and innovative ways.

The electronic computing device may select the task to be solves randomly. Alternatively, the electronic computing device may select the task depending on an input of the person or depending on historical already solved tasks. It is obvious, that other selection algorithms can be uses, too.

According to another embodiment, a task input of the person is received, and the task input of the person is compared with the task to be solved. For example, the person can input a task input, in particular depending on the generated hint in order to solve the selected task. The task input, in particular a part of the solution of the task, can be received by the electronic computing device and can be compared with the task to be solved. Depending on the comparison, the electronic computing device can give, for example, another hint in order to solve the problem. Therefore, a virtual communication can be provided in order to train the person for asking open questions.

In another embodiment, if the task input is similar to the task to be solved, the method is finished. Therefore, the person has managed/solved the task, and the simulation/training is finished. Alternatively, or additionally, after a certain amount of time the training can be finished. For example, after solving the task, another task can be selected by the electronic computing device, and the method can be performed again.

In another embodiment, depending on a similarity threshold the comparison is performed. In particular, the task to be solved is a specific task to be solved. By asking open questions, the person can get hints about the task to be solved, but it may be hard for the person to solve the problem detailed in contrast to the specific task. Therefore, the input of the person can be compared with the task to be solved, and a similarity comparison may be provided. If the similarity threshold is exceeded, the training can be finished. If the similarity threshold is not exceeded, the method can be continued until the similarity threshold is exceeded.

In another embodiment, the comparison of the task input and the task to be solved is presented on a display device, in particular of the electronic computing device. Therefore, the person may receive the task to be solved and can compare for himself/herself what he/she has solved in comparison with the tasks to be solved. Therefore, the person may get an individual feedback and can therefore develop his or her skills.

In another embodiment, if a closed question is received, no hint for solving the task is generated. A closed question is a type of question that can be answered with a simple yes or no adaptability, or a very brief answer. Closed questions typically seek specific information or factional answers and limit the respondent's ability to provide additional details or insights. While closed questions can be useful for gathering specific information quickly, they do not encourage active listening or deeper understanding of the speaker's perspective. They also limit the respondent's ability to provide additional context or insights that may be relevant to the conversation. In contrast, open questions require more detailed responses and encourage active listening and empathy. Open questions can help build rapport and trust with others, uncover new information or perspectives, and develop soft skills such as problem solving, creativity, and adaptability. While closed questions have their place in conversations and interviews, it is generally common to use open questions as much as possible to encourage active listening, deeper understanding, and effective communication. Therefore, if a close question is received, no hint for solving the task is generated. This means that the person may not get any information for solving the task and therefore may not proceed in the training.

In another embodiment, if a closed question is received, a hint for generating an open question for the person is generated. For example, the electronic computing device may generate the hint that the person has to use open questions in order to proceed in the training. In particular, the electronic computing device may generate, for example, an answer which may include the information, that the question inputted by the person is not an open question. Therefore, the user may get an information that the inputted question is not an open question.

According to another embodiment, the hint for generating the open question comprises at least one information about how open questions are constructed. For example, a hint may be given that an open question cannot be answered with a yes or no. The hint may also comprise examples of open questions in order to provide the person with information, how open questions are structured. Therefore, the person may learn how open questions are structured and therefore is trained how to ask open questions.

According to another embodiment, after receiving a predetermined number of open questions by the person the method is finished. In particular, therefore, after inputting a plurality of open questions, the method is finished and, for example, a new task to be solved can be selected by the electronic computing device. Therefore, the person may learn by solving other tasks how to train asking open questions. This may rise the user experience for the person.

In another embodiment, the task to be solved is repainting a selected painting and/or rewriting a selected poem. For example, the electronic computing device is prompted with a brief to select a famous painting and only answers open questions on the painting's appearance. The person may be presented with an empty canvas and simple paint tools. The user may talk to the electronic computing device about the painting and try to draw it. The user can ask, for example, what is on the painting, what are the core objects and, furthermore, may receive an answer. If the user asks, for example, is the tree green, he will not get an answer about the painting, because it is a closed question. When the user has finished his painting, the electronic computing device may reveal the actual "famous" painting, and therefore, the user may compare his painting with the famous painting.

In another embodiment, at least the analyzation is provided by a large language model. Furthermore, the "conversation" between the electronic computing device and the person can be provided with a large language model. A large language model, which may also be called language model, is in particular be referred to the context of natural language processing (NLP) and artificial intelligence (Al). A large language model is a type of artificial intelligence model that is trained on large amounts of text data to understand patterns, structures, and meaning in human language. A large language model typically refers to a model that has been trained on an extremely large dataset, often consisting of billions or even trillions of words. These models are capable of generating human-like texts, translating languages, summarizing documents, answering questions, and performing other language-related tasks with high accuracy and fluency. Large language models have many potential applications in areas such as a customer service, content creation, education and research. However, they also raise ethical, and society consensus related to bias, misinformation, and job displacement. As such, a large language model is an important approach to develop deployment of large language models with care under consideration of their potential impacts on individuals and society as a whole. Therefore, a large language model is used to train the systematic questioning techniques of the person.

In another embodiment, the large language model is trained for role playing with persons. Role playing is a common technique used in language learning to simulate real-life conversations and scenarios. Role playing allows learners to practice speaking, listening and interacting with others in a safe and controlled environment. In the context of LLMs, role playing can be used to create interactive and immersive language learning experiences. For example, a large language model could generate personalized role-playing scenarios based on the learner's proficiency level, interests and goals. The person can then interact with the virtual character or Al-power chat board in real-time, practicing language skills and receiving feedback on the performance. Role-playing can help develop various soft skills that are essential for effective communication and relationship building. For simulating real-life conversations and scenarios, role-playing can help learners practice active listening, empathy, problem-solving, creativity, and adaptability. It can also help built cultural awareness and sensitivity, as learners are exposed to different perspective and world views through the virtual characters they interact with.

In particular, the present invention is a computer-implemented method. Therefore, another aspect of the invention relates to a computer program product comprising program code means for performing a method according to the preceding aspect.

Furthermore, the present invention relates to a computer-readable storage medium comprising at least the computer program product according to the preceding aspect.

A still further aspect of the invention relates to an electronic computing device for providing a training simulation for a person, wherein the electronic computing device is configured for performing a method according to the preceding aspect. In particular, the method is performed by the electronic computing device.

Advantageous embodiments of the method are to be regarded as advantageous embodiments of the computer program product, the computer-readable storage medium, as well as the electronic computing device. The electronic computing device therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use the technique of NLP. NLP may use different technical methods for providing its service: Tokenization: This is the process of breaking down text into individual words or tokens. Tokenization is a fundamental step in NLP, as it allows us to analyze and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analysis; Named Entity Recognition (NER): This is the process of identifying and categorizing named entities (e.g., people, organizations, locations) in text. NER is used in a variety of applications, including information extraction, question answering, and search. Sentiment Analysis: This is the process of analyzing text to determine its overall sentiment or emotion. Sentiment analysis is used in applications such as social media monitoring, customer feedback analysis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analysis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are Al systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide a robust NLP, training of the model is required. Training data is the input that is used to train NLP models. It typically consists of large amounts of text data, along with labels or annotations that indicate the desired output for each input. The quality and quantity of training data are critical factors in determining the performance of NLP models. There are several types of training data commonly used in NLP: Annotated Data: This is training data that has been manually labeled or annotated by human experts. For example, a dataset of product reviews might be annotated with sentiment labels (positive, negative, neutral) to train a sentiment analysis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore:
- Fig. 1: shows a schematic block diagram of an embodiment of an electronic computing device according to the present invention; and
- Fig. 2: a schematic view on a display device of the electronic computing device providing an embodiment according to the invention.

In the figures the same elements are comprising the same reference signs.

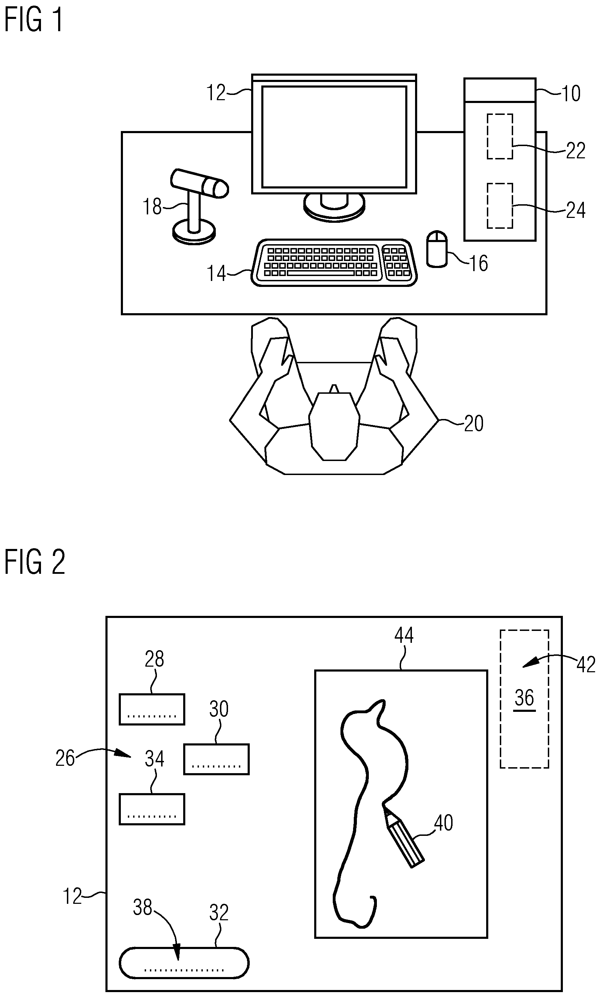

Fig. 1 shows a schematic block diagram according to an embodiment of an electronic computing device 10. The electronic computing device 10 may comprise at least a display device 12. Furthermore, the electronic computing device 10 may comprise a first input device 14, for example a keyboard, and a second input device 16, for example a mouse. Furthermore, a third input device 18, for example a microphone, is shown.

Fig. 1 further shows a person 20. The electronic computing device 10 is, in particular, for providing a training simulation 22 for the person 20. The electronic computing device 10 therefore may comprise a large language model 24. Alternatively the training simulation may be provided by an online platform and therefore stored outside of the electronic computing device 10.

Fig. 2 shows a schematic diagram according to a display shown on the display device 12, according to an embodiment of the invention.

In particular, Fig. 2 shows on the left side of the display device 12 a conversation 26 between the electronic computing device 10 and the person 20. For example, a first part of the conversation 28 was generated from the electronic computing device 10. A second part of the conversation 30 was generated by the person 20, in particular by using an input platform 32. After the second part of the conversation 30, a third part of the conversation 34 is shown. The conversation may comprise more parts, than shown.

In particular, Fig. 2 shows that the method comprises the steps of selecting a task 36 to be solved by the electronic computing device 10, in particular, out of a plurality of stored tasks by the electronic computing device 10. The input platform 32 is provided for capturing at least one question 38 from the person 20 for solving the task 36. The question 38 is received by the electronic computing device 10, and the question 38 is analyzed, if the question 38 is an open question 38, by the electronic computing device 10. If the question 38 is an open question, a hint for the person 20 to solve the task 36 is generated by the electronic computing device.

In particular, a task input 40 is received, and the task input 40 of the person 20 is compared with the task 36 to be solved. If the task input 40 is similar to the task 36 to be solved, the method is finished. In particular, depending on a similarity threshold, the comparison is performed. Furthermore, Fig. 2 shows that the comparison of the task input 40 and the task 36 to be solved is presented on the display device 12.

Furthermore, if a closed question 38 is received, no hint for solving the task 36 is generated. If a closed question is received, a hint for generating an open question 38 for the person 20 is generated. Furthermore, the hint for generating the open question 38 may comprise at least one information about how open questions are constructed. Furthermore, after receiving a predetermined amount of open questions 38 by the person 20, the method is finished.

As shown in Fig. 2, the task 36 to be solved may be repainting a selected painting 42 and/or rewriting a poem.

Therefore, the shown invention provides an application involving a conservation, where only the use of open questions 38 trigger the progress. The electronic computing device 10 implements the large language model 24 to simulate a conversation and the person 20 interface with a simple drawing canvas 44. The large language model 24 is prompted with a brief to select a famous painting 42 and only answers open questions 38 on the painting's 42 appearance. The person 20 is presented with an empty canvas 44 and simple paint tools. The person 20 may ask the large language model 24 about the painting 42 and try to redraw it. The person 20 may ask "what is on the painting", "where are the core objects", and, furthermore, and may receive an answer, because the asked questions were open questions. If the person 20 ask "is the tree green", he will not receive an answer as the question is a closed question.

When the person 20 has finished his painting, the large language model 24 reveals the actual famous painting 42.

### List of Reference

- 10: electronic computing device
- 12: display device
- 14: first input device
- 16: second input device
- 18: third input device
- 20: person
- 22: training simulation
- 24: large language model
- 26: conversation
- 28: first part of the conversation
- 30: second part of the conversation
- 32: input platform
- 34: third part of the conversation
- 36: task
- 38: question
- 40: task input
- 42: painting
- 44: canvas

## Claims

1. A method for providing a training simulation (22) for a person (20) by an electronic computing device (10), comprising the steps of:
- selecting a task (36) to be solved by the person (20) out of a plurality of stored tasks (36) by the electronic computing device (10);
- providing an input platform (32) for capturing at least one question (38) from the person (20) for solving the task (36) by the electronic computing device (10);
- receiving the question (38) inputted by the person (20) by the electronic computing device (10);
- analyzing the received question (38) if the question (38) is an open question (38) by the electronic computing device (10); and.
- if the received question (38) is an open question (38), generating a hint for the person (20) to solve the task (36) by the electronic computing device (10).

2. A method according to claim 1, **characterized in that**
a task input (40) of the person (20) is received and the task input (40) of the person (20) is compared with the task (36) to be solved.

3. A method according to claim 2, **characterized in that**,
if the task input (40) is similar to the task (36) to be solved, the method is finished.

4. A method according to claim 2 or 3, **characterized in that**
depending on a similarity threshold the comparison is performed.

5. A method according to any one of claims. 2 to 4, **characterized in that**
the comparison of the task input (40) and the task (36) to be solved is presented on a display device (12).

6. A method according to any one of the claims 1 to 5, **characterized in that**,
if a closed question (38) is received, no hint for solving the task (36) is generated.

7. A method according to any one of the claims 1 to 6, **characterized in that**,
if a closed question (38) is received, a hint for generating an open question (38) for the person (20) is generated.

8. A method according to claim 7, **characterized in that**
the hint for generating the open question (38) comprises at least one information about how open questions (38) are constructed.

9. A method according to any one of the claims 1 to 8, **characterized in that**
after receiving a predetermined amount of open questions (38) by the person (20) the method is finished.

10. A method according to any one of the claims 1 to 9, **characterized in that**
the task (36) to be solved is repainting a selected painting (42) and/or rewriting a poem.

11. A method according to any one of the claims 1 to 10, **characterized in that**
at least the analyzation is provided by a large language model (24).

12. A method according to claim 11, **characterized in that**
the large language model (24) is trained for role playing with persons.

13. A computer program product comprising program code means for performing a method according to any one of the claims 1 to 12.

14. A computer-readable storage medium comprising at least the computer program product according to claim 13.

15. An electronic computing device (10) for providing a training simulation (22) for a person (20), wherein the electronic computing device (10) is configured for performing a method according to any one of claims 1 to 12.
